# DEMANDE DE BREVET EUROPEEN

(11) **EP 0 707 227 A1**
(43) Date de publication de la demande: **17.04.1996**
(21) Numéro de dépôt: 95402259.6
(22) Date de dépôt: 09.10.1995
(51) Int. Cl.: G02B 6/38, G02B 6/42, G02B 6/30

(54) **Procédé de fixation d'une fibre optique à maintien de polarisation et ferrule pour une telle fibre**

(30) Priorité: 14.10.1994 FR 9412292
(71) Demandeur: ALCATEL N.V., NL-2288 BH Rijswijk (NL)
(72) Inventeur: Di Maggio, Michel, F-78830 Bonnelles (FR); Brot, Christian, F-91310 Leuville Sur Orge (FR); Duchet, Christian, F-91460 Marcoussis (FR)
(74) Mandataire: Fournier, Michel

(57) **Abrégé**

On réalise un éclairage transversal (22) de la fibre à fixer (21), puis on pilote une orientation du plan de maintien de polarisation (14) de cette fibre par un examen direct d'éléments internes à cette fibre (10, 12) rendus visibles par cet éclairage. Cet éclairage est effectué à travers la paroi d'une ferrule transparente (16) maintenant cette fibre.

L'invention s'applique dans les systèmes de télécommunication à fibres optiques.

## Description

on connaît des fibres optiques dites à maintien de polarisation. Ces fibres comportent des éléments internes grâce auxquels elles imposent ou du moins maintiennent une polarisation linéaire de la lumière qu'elles guident. Le plan défini par l'axe de la fibre et cette polarisation sera appelé ci-après "plan de maintien de polarisation". De telles fibres sont classiquement utilisées dans des systèmes de télécommunication lorsqu'il est nécessaire qu'une lumière reçue par un composant optique présente une plan de polarisation convenable défini par ce composant. Pour cela on fait guider cette lumière par une telle fibre jusqu'à ce composant.

La fixation d'une telle fibre doit alors été faite non seulement pour assurer un alignement et des positions longitudinale et transversale convenables de l'extrémité de la fibre par rapport au composant, mais encore pour assurer une coïncidence entre le plan de maintien de polarisation propre à la fibre et le plan de polarisation défini par le composant. Une opération d'orientation de ce plan de maintien de polarisation est effectuée pour cela. Elle est rendue difficile par le fait que les éléments internes à la fibre sont tous transparents et qu'un simple examen de celle-ci ne permet donc pas de percevoir la direction de ce plan.

C'est pourquoi il est connu, dans le cas usuel d'une fibre imposant une polarisation linéaire, d'injecter une lumière non polarisée dans cette fibre. On détermine alors la direction du plan de polarisation de la lumière sortant en extrémité de la fibre. Puis on fait tourner la fibre autour de son axe pour amener ce plan dans la direction qui est souhaitée pour le plan de maintien de polarisation.

Par ailleurs la fibre optique peut classiquement être maintenue dans un canal capillaire formé dans une ferrule constituée de céramique.

La présente invention a notamment pour but de simplifier l'opération d'orientation du plan de maintien de polarisation d'une fibre optique devant être couplée à un composant optique sensible à cette orientation.

Dans ce but elle a notamment pour objet un procédé de fixation d'une fibre optique à maintien de polarisation, ce procédé étant caractérisé par le fait qu'une orientation du plan de maintien de polarisation de la fibre optique est pilotée par un examen d'éléments internes à cette fibre avec l'aide d'un éclairage transversal de ces éléments, cet éclairage étant effectués à travers la paroi d'une ferrule transparente maintenant cette fibre.

A l'aide des figures schématiques ci-jointes on va indiquer ci-après, à titre d'exemple non limitatif, comment la présente invention peut être mise en oeuvre. Lorsqu'un même élément est représenté sur plusieurs figures il y est désigné par le même signe de référence.

La figure 1 représente une vue en perspective d'une fibre à maintien de polarisation dans sa ferrule.

La figure 2 représente une vue en perspective montrant cette fibre, cette ferrule, son support, et un composant optique à coupler à cette fibre.

Un procédé selon cette invention comporte les opérations suivantes qui sont conues en elles-mêmes :
- Introduction d'une fibre optique 2 dans un canal capillaire 17 formé dans une ferrule 16 pour maintenir cette fibre. Cette fibre présente un axe 8, est constituée d'un verre transparent et comporte des éléments internes 10, 12 également transparents définissant un plan de maintien de polarisation passant par cet axe. Ce canal est entouré par une paroi de cette ferrule et présente lui aussi un axe, de sorte que les axes de cette fibre et de ce canal sont amenés en coïncidence mutuelle et constituent un axe commun.

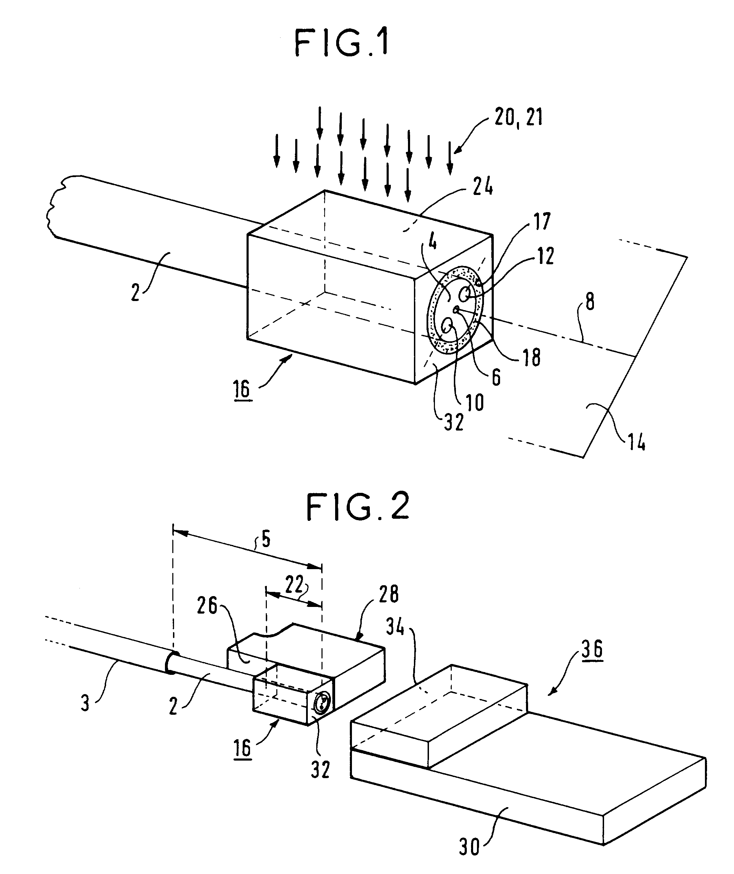

Plus particulièrement la fibre à fixer 2 est une fibre 5 de silice dont la gaine plastique 3 est visible sur la figure 2 et été éliminée dans un tronçon terminal 5.

Son diamètre est par exemple de 125 µm.

Ses divers éléments diffèrent par des impuretés de dopage introduites dans la silice.

Elle présente une gaine optique 4, et un coeur 6 disposé selon son axe 8. Elle est par exemple du type connu dit "Panda" : Ses propriétés de maintien de polarisation lui sont conférées par deux barreaux de silice 10 et 12 qui sont disposés de manière diamètralement opposée et qui introduisent des contraintes mécaniques dans la fibre. Ces barreaux définissent un plan de maintien de polarisation 14.
- Déplacement axial de cette fibre dans ce canal après cette introduction pour qu'un tronçon de cette fibre soit placé dans ce canal et constitue un tronçon de fixation 22. Ce tronçon fait partie du tronçon terminal 5.
- Fixation du tronçon de fixation à la ferrule après le déplacement axial. Pour réaliser cette fixation on infiltre une colle dans le canal. Dans le cas de la présente invention cette colle est avantageusement une résine 18 réticulable par irradiation à la lumière ultraviolette et une telle irradiation est effectuée par un faisceau lumineux 20 à travers la paroi de la ferrule.
- Enfin fixation de la ferrule à un support de ferrule 28 par rapport auquel la fibre doit être fixée pour permettre son couplage à un composant optique 30 fixé ou à fixer à ce support. Cette fixation peut être effectuée après ou avant la fixation de la fibre à la ferrule.

Le plan de maintien de polarisation de la fibre doit être fixé en coïncidence avec un plan de polarisation imposé par ce composant et défini par rapport à ce support. La coïncidence de ces deux plans est assurée par une opération d'orientation de plan de maintien incluant une rotation relative de cette fibre par rapport à ce support et/ou à cette ferrule autour de l'axe commun 8. Cette opération d'orientation de plan de maintien doit être effectuée après l'introduction de la fibre dans la ferrule et avant que cette fibre soit fixée au composant par l'intermédiaire de cette ferrule et de ce support de ferrule.

Selon la présente invention la ferrule 16 est transparente. L'opération d'orientation de plan de maintien inclut alors aussi un éclairage du tronçon de fixation 22 de la fibre à travers la paroi de la ferrule. De plus la rotation relative de la fibre est pilotée par un examen des éléments internes 10, 12 bien visibles au bout de la fibre.

Cet éclairage est effectué par un faisceau de lumière visible 20, 21 qui se réfléchit dans une certaine mesure sur les surfaces de la ferrule et de la fibre, et qui est ainsi rendu quelque peu diffus. Les avantages de la présente invention tiennent notamment au fait surprenant que, grâce à un tel éclairage diffus, des éléments tels que ces barreaux 10 et 12 deviennent visibles et montrent ainsi la direction du plan de maintien de polarisation 14. La visibilité des barreaux est améliorée après l'introduction de la colle ainsi que dans le cas où la ferrule présente une face plane à travers laquelle on effectue l'éclairage.

La ferrule 16 présente une surface d'indexation angulaire 24 parallèle à l'axe commun 8 et coopérant avec une surface d'indexation angulaire 26 du support de ferrule 28. Cette coopération permet de définir une position angulaire de cette ferrule par rapport à ce support en rotation autour de cet axe commun. La rotation relative de la fibre est alors effectuée par rapport à cette ferrule, et les opérations d'orientation de plan de maintien, de fixation du tronçon de maintien 22 à la ferrule, et de fixation de la ferrule au support de ferrule se succèdent dans cet ordre. Ces surfaces d'indexation angulaire sont avantageusement planes. Plus particulièrement la ferrule présente la forme d'un prisme à section par exemple carrée, une face latérale de ce prisme constituant la surface d'indexation.

Une fixation provisoire de la ferrule à son support est alors aisément réalisée par collage de cette face.

Le côté du carré est typiquement compris entre 1 et 3 mm, par exemple 1,6 mm. Le diamètre du canal 17 est par exemple de 160 µm.

La ferrule est par exemple constituée d'un verre contenant de la silice et d'autres oxydes métalliques usuels.

Les quatre faces latérales du prisme à section carrée qu'elle constitue sont polies, de même que les faces extrêmes telle que la face 32.

Cette face extrême est transversale par rapport à l'axe commun et typiquement perpendiculaire à cet axe. Elle constitue une face de positionnement de fibre 32. Le procédé selon l'invention comporte alors en outre les opérations suivantes :
- Réalisation d'un bloc-composant 36 comportant ledit composant 30 et présentant une face plane constituant une face de positionnement de composant 34.
- Mise en appui mutuel des deux faces de positionnement de fibre 32 et de composant 34.
- Glissement mutuel du support de ferrule 28 et du bloc composant 36 avec conservation dudit appui mutuel jusqu'à obtention d'une position de couplage optimal.
- Enfin collage mutuel des faces de positionnement de fibre et de composant.

## Revendications

1. Procédé de fixation d'une fibre optique à maintien de polarisation, ce procédé étant caractérisé par le fait qu'on réalise un éclairage transversal (20, 21) de cette fibre (2) et qu'on pilote une orientation du plan de maintien de polarisation (14) de cette fibre par un examen direct d'éléments internes à cette fibre (10, 12) rendus visibles par cet éclairage, cet éclairage étant effectués à travers la paroi d'une ferrule transparente (16) maintenant cette fibre.

2. Procédé selon la revendication 1, ce procédé comportant les opérations suivantes :
- introduction d'une fibre optique (2) dans un canal capillaire (17) formé dans une ferrule transparente (16) pour maintenir cette fibre, cette fibre présentant un axe (8), étant constituée d'un verre transparent et comportant des éléments internes (10, 12) également transparents définissant un plan de maintien de polarisation passant par cet axe, ce canal étant entouré par une paroi de cette ferrule et présentant un axe, de sorte que les axes de cette fibre et de ce canal sont amenés en coïncidence mutuelle et constituent un axe commun,
- déplacement axial de cette fibre dans ce canal après cette introduction pour qu'un tronçon de cette fibre soit placé dans ce canal et constitue un tronçon de fixation (22) de cette fibre,
- fixation dudit tronçon de fixation à la ferrule après ledit déplacement axial,
- et fixation de la ferrule à un support de ferrule (28) par rapport auquel la fibre doit être fixée pour permettre son couplage à un composant optique (30) fixé ou à fixer à ce support, le plan de maintien de polarisation de cette fibre devant être fixé en coïncidence avec un plan de polarisation imposé par ce composant et défini par rapport à ce support, la coïncidence de ces deux plans étant assurée par le fait que ce procédé comporte aussi une opération d'orientation de plan de maintien incluant une rotation relative de cette fibre par rapport à ce support et/ou à cette ferrule autour dudit axe commun, cette opération d'orientation de plan de maintien étant effectuée après ladite introduction de la fibre dans la ferrule et avant que cette fibre soit fixée au composant par l'intermédiaire de cette ferrule et de ce support de ferrule,
- ce procédé étant caractérisé par le fait que ladite opération d'orientation de plan de maintien inclut aussi un éclairage du tronçon de fixation (22) de la fibre à travers la paroi de la ferrule, ladite rotation relative de la fibre étant pilotée par un examen desdits éléments internes (10, 12) de la fibre.

3. Procédé selon la revendication 2, ce procédé étant caractérisé par le fait que la ferrule (16) présente une surface d'indexation angulaire (24) parallèle audit axe commun (8) et coopérant avec une surface d'indexation angulaire (26) du support de ferrule (28) pour définir une position angulaire de cette ferrule par rapport à ce support en rotation autour dudit axe commun (8), ladite rotation relative de la fibre étant effectuée par rapport à cette ferrule, les opérations d'orientation de plan de maintien, de fixation du tronçon de maintien (22) à la ferrule, et de fixation de la ferrule au support de ferrule se succédant dans cet ordre.

4. Procédé selon la revendication 3, ce procédé étant caractérisé par le fait que la ferrule (16) présente une face extrême transversale par rapport à l'axe commun et constituant une face de positionnement de fibre (32), ce procédé comportant en outre les opérations suivantes :
- réalisation d'un bloc-composant (36) comportant ledit composant (30) et présentant une face plane constituant une face de positionnement de composant (34),
- mise en appui mutuel des deux faces de positionnement de fibre (32) et de composant (34),
- glissement mutuel du support de ferrule (28) et du bloc composant (36) avec conservation dudit appui mutuel jusqu'à obtention d'une position de couplage optimal,
- et collage mutuel des faces de positionnement de fibre et de composant.

5. Ferrule pour une fibre optique à maintien de polarisation (2), cette ferrule (16) étant caractérisée par le fait qu'elle est transparente et présente un axe (8), un canal capillaire (17) selon cet axe, et une face plane (24) parallèle à cet axe.

6. Ferrule selon la revendication 5, caractérisée par le fait qu'elle présente la forme d'un prisme à génératrices parallèles audit axe (8) et à section rectangulaire.

7. Ferrule selon la revendication 6, caractérisée par le fait que sa section est carrée.
